# FASCICULE DE BREVET EUROPEEN

(11) **EP 2 750 022 B1**
(45) Date de publication et mention de la délivrance du brevet: **04.07.2018**
(21) Numéro de dépôt: 13199479.0
(22) Date de dépôt: 23.12.2013
(51) Int. Cl.: G06F 21/60, G06F 3/12

(54) **Procédé de génération d'un indicateur de conformité entre une politique de sécurité et un document numérique destiné à l'impression**
Verfahren zur Erzeugung eines Konformitätsindikators zwischen einer Sicherheitspolitik und einem digitalen Dokument, das für den Druck bestimmt ist
Method for generating an indicator of conformity between a security policy and a digital document for printing

(30) Priorité: 28.12.2012 FR 1262939
(43) Date de publication de la demande: 02.07.2014
(73) Titulaire: Cassidian CyberSecurity SAS, 78990 Elancourt (FR)
(72) Inventeur: Gompel, Paul, 92100 Boulogne Billancourt (FR); Breton, Sébastien, 78370 Plaisir (FR)
(74) Mandataire: Camus, Olivier Jean-Claude

(56) Documents cités:
- US-A1- 2003 179 400

## Description

### DOMAINE

Le domaine de l'invention concerne la politique de sécurité appliquée aux documents destinés à être imprimés. Plus particulièrement, le domaine de l'invention se rapporte aux politiques de sécurité mettant en oeuvre des marquages explicites sur les documents à imprimer notamment au sein d'un réseau, par exemple celui d'une entreprise.

### ETAT DE L'ART

Actuellement, il existe des procédures permettant de mettre en oeuvre une politique de sécurité concernant les impressions de documents. Certaines de ces procédures sont imposées par la législation ou les règles d'une entreprise. En général, elles imposent au personnel une obligation d'inscrire des mentions obligatoires de type « diffusion France », « réservé groupe », « secret défense », « confidentiel défense » ou d'autres inscriptions mentionnant explicitement une restriction de diffusion à une communauté donnée concernant un document donné.

Une première problématique concerne l'ensemble des règles attachées à chacune de ses inscriptions. En effet, une mention obligatoire comporte souvent un motif généralement formé de caractères désignant le type de restriction. La mention peut être caractérisée par un agencement particulier tel qu'une disposition ou une orientation sur une page, une police ou une couleur donnée, ou encore les numéros de pages dans lesquelles doivent figurer la mention. Il est possible aussi que les règles de sécurité définissent une police de caractères, une couleur et imposent d'autres contraintes de signalisations permettant à un utilisateur de connaitre quel type de document il a entre les mains si une erreur de diffusion venait à se produire.

La gestion des règles de sécurité comprend, selon les politiques appliquées, de nombreuses actions à réaliser qu'il est nécessaire de connaitre et d'appliquer de la même manière au sein d'une communauté.

Une seconde problématique concerne la politique de sécurité liée à un utilisateur ou un groupe d'utilisateurs au sein d'une communauté et son applicabilité.

En effet, une imprimante peut être déportée d'un poste notamment lorsque cette dernière est partagée par un groupe d'utilisateurs répartis dans différents locaux ou bureaux. Lors du lancement d'une impression, il arrive que le document soit malencontreusement dirigé vers une mauvaise imprimante ou que le délai pour récupérer un document impose que ce dernier réside pendant un certain temps à proximité de l'imprimante. Un personnel non autorisé à la consultation de ces derniers peut en prendre connaissance. Parmi ces cas on relève les exemples de documents comptables ou personnels ou encore ayant un degré donné de confidentialité militaire.

Il est donc nécessaire que ces documents comportent une mention explicite et visible de prime abord sur la restriction de diffusion.

Enfin, une troisième problématique concerne les différents types de formats de documents qui sont susceptibles d'être imprimés et qui nécessitent une mention de restriction de diffusion. Un inconvénient est que chaque format gère par les manipulations d'un utilisateur : la mise en forme, l'agencement, la police et le type de mentions nécessaires. Par exemple le document US 2003/179400 A1 de G. Kofman et al. décrit une méthode pour remplir un formulaire cible structuré.

Une dernière problématique correspond à la connaissance de mentions de restrictions par un personnel et ce qu'elles impliquent comme règles dans l'édition d'un document. Chacun interprète ces règles, les applique ou ne les applique pas de la même manière alors que certaines requièrent les mêmes exigences.

Ces inconvénients ne permettent pas un déploiement efficace d'une politique de sécurité sur la gestion des documents imprimés au sein d'une communauté d'une structure telle qu'une entreprise ou une administration par exemple.

### RESUME DE L'INVENTION

L'invention permet de résoudre les inconvénients précités. L'invention consiste en un procédé et un système tels que définis dans les revendications.

L'objet de l'invention concerne un procédé de génération d'un indicateur de conformité entre une politique de sécurité et un document numérique comprenant un niveau de sécurité, ledit document étant destiné à être imprimé, la politique de sécurité comprenant un ensemble de règles de sécurité.

En outre, le procédé comprend :
- une réception d'un document numérique selon un premier format par un premier serveur ;
- une sélection d'une politique de sécurité comprenant au moins une règle de sécurité comportant la définition d'au moins un motif d'impression numérique sur un document numérique ;
- une génération d'une reconnaissance optique de caractères appliquée au document générant un premier ensemble de données ;
- une corrélation entre au moins un motif numérique de la politique de sécurité sélectionnée et le premier ensemble de données généré ;
- une génération d'au moins un indicateur de conformité entre la politique de sécurité sélectionnée et le niveau de sécurité du document en fonction de la corrélation obtenue.

Un avantage est de permettre d'informer un utilisateur ou une administration d'un réseau qu'une politique de sécurité est appliquée à un document numérique lors de son impression.

Le premier serveur peut comprendre avantageusement selon un mode préféré de l'invention, un proxy d'impression.

Avantageusement, le procédé de génération d'un indicateur de conformité comprend :
- une étape subséquente à la réception du document de conversion du premier format du document numérique en un second format adapté à la description de page pour l'impression, le second format comprenant au moins une fonction permettant la formulation vectorielle et/ou la lecture d'une image matricielle des données décrites d'au moins une page dudit document.

Un avantage de cette caractéristique est d'appliquer chaque politique de sécurité à un format commun à tous les documents en s'affranchissant des différents formats générés par des applications de natures différentes. Cela permet une homogénéisation des traitements du procédé à tous les documents reçus par le proxy d'impression.

Avantageusement, au moins une règle de sécurité sélectionnée comprend au moins :
- un motif d'impression ;
- une zone d'impression sur au moins une page du document numérique dudit motif d'impression ;
- un agencement du motif dans la zone d'impression.

Un avantage de cette caractéristique est de permettre de traiter de la même manière tous les documents quel que soit leur format. Le format vectoriel permet par exemple de repérer un emplacement et un agencement d'un motif sans connaitre le type de données définissant un document à imprimer notamment de la nature de son format. La sélection de la politique de sécurité est automatiquement effectuée selon une accréditation attribuée à un utilisateur après l'identification de son profil utilisateur. Ceci permet par exemple d'appliquer une politique de sécurité à une communauté donné d'utilisateurs, par exemple si cette communauté définit une zone géographique ou un service donné d'une entreprise. Cette possibilité permet de faire appliquer des règles de sécurité de manière commune selon un type de profil utilisateur donné. Ceci peut être notamment utile lorsque qu'une politique de sécurité s'applique entièrement à une communauté.

Avantageusement, un motif d'une règle de sécurité peut être compris dans la liste suivante :
- une mention indiquant une restriction de lecture ;
- une signature ;
- une mention qu'une page blanche est laissée intentionnellement blanche ;
- un numéro d'exemplaire ;
- un numéro de page ;
- une liste de destinataire.

Avantageusement, la génération d'un indicateur comprend la génération d'un log dans une base de données.

Selon un second aspect, l'invention concerne un procédé de génération d'au moins un motif d'impression sur document numérique, ledit motif correspondant à une règle de sécurité sélectionnée.

Ce procédé comprend :
- une génération d'un indicateur selon le procédé de génération d'un indicateur précédemment défini, ledit indicateur relevant un écart entre au moins un motif attendu et non représenté sur le document électronique en regard de la politique de sécurité sélectionnée ;
- une sélection du document selon son second format ;
- une récupération d'informations de disposition comprenant un agencement, une position et un numéro de page selon la règle de sécurité définissant le motif d'impression ;
- une génération d'au moins un motif d'impression sur le document selon les informations de disposition récupérées.

Avantageusement, un affichage du document sur un moyen de visualisation permet une inspection visuelle par un utilisateur de la génération du motif d'impression sur le document électronique.

Avantageusement, le procédé comprend l'impression du document.

Selon un troisième aspect, l'objet de l'invention concerne un système de gestion de l'application d'une politique de sécurité au sein d'un réseau de communication pour l'impression de documents.

Le système comprend :
- un ensemble de stations utilisateurs ;
- un premier serveur pouvant comporter un proxy d'impression permettant de générer une interface utilisateur d'impression sur une station utilisateur, de récupérer un document électronique pour son impression, de sélectionner une imprimante pour la réalisation de ladite impression ;
- un second serveur de gestion des politiques de sécurité comprenant un ensemble de règles de sécurité, chacune des règles comprenant la définition d'un ensemble de motifs identifiables sur un document électronique ;
- un premier calculateur permettant la conversion d'un premier format du document en un second format, le second format étant adapté à la description de page pour l'impression et comprenant au moins une fonction permettant la formulation vectorielle et/ou la lecture d'une image matricielle de données ;
- un second calculateur permettant de réaliser une reconnaissance optique de caractères d'un document récupéré par le premier serveur pour générer un premier ensemble de données ;
- un troisième calculateur permettant d'effectuer :
   ∘ une corrélation de données entre le premier ensemble de données et les données représentant les motifs d'une règle de sécurité ;
   ∘ une génération d'indicateurs traçant les écarts entre les règles de sécurité à appliquer à un document et les motifs manquants sur le document et relatifs à cette règle de sécurité.

Avantageusement, un serveur de log sauvegarde les indicateurs générés.

Avantageusement, le proxy d'impression permet :
- une récupération d'informations de disposition comprenant un agencement, une position et un numéro de page pour chaque motif de la politique de sécurité choisi ;
- une sélection du second format du document numérique ;
- une génération d'au moins un motif d'impression sur le document sélectionné selon les informations de dispositions récupérées.

### BREVES DESCRIPTION DES FIGURES

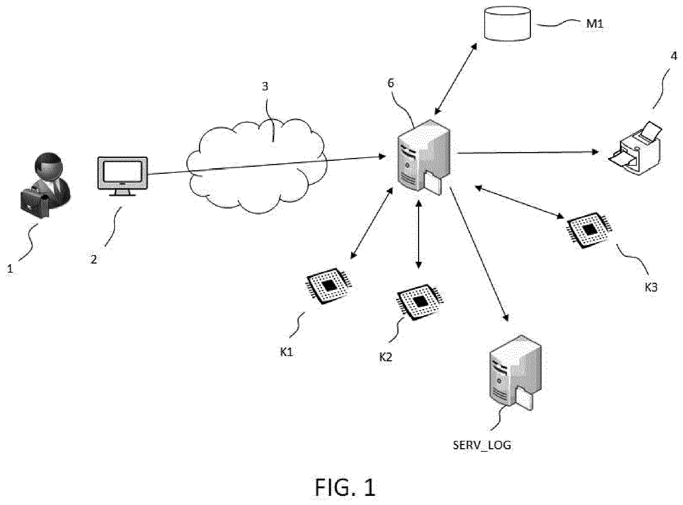

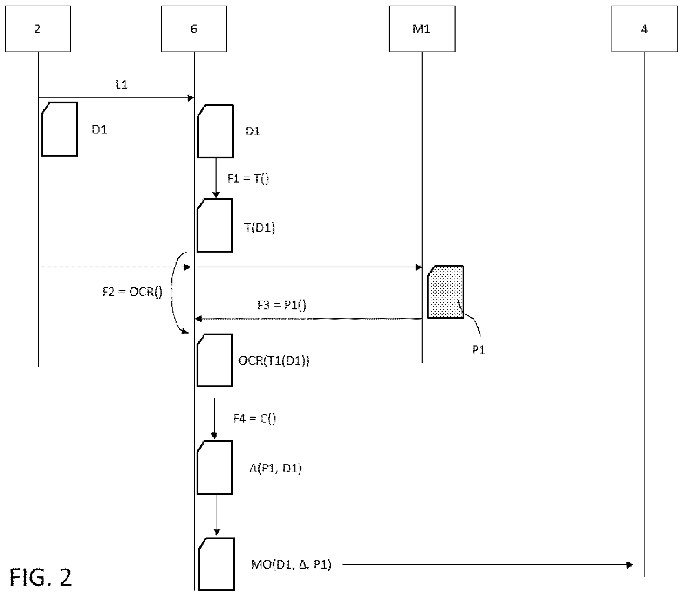

D'autres caractéristiques et avantages de l'invention ressortiront à la lecture de la description détaillée qui suit, en référence aux figures annexées, qui illustrent :
▪ figure 1 : un schéma des différents éléments du système de l'invention pour la réalisation du procédé de génération d'un indicateur et d'un motif d'impression ;
▪ figure 2 : un schéma des différentes séquences permettant de mettre en oeuvre le procédé de l'invention.

### DESCRIPTION

La figure 1 représente une portion d'un réseau 3 de communication tel qu'un réseau d'entreprise. Un utilisateur 1 est représenté ainsi qu'une station de travail 2 qui peut être un ordinateur. L'utilisateur peut être connecté à une station de travail fixe ou un ordinateur portable comportant des moyens de se connecter au réseau 3.

L'invention se rapporte à un réseau 3 dans lequel un utilisateur 1 s'y connecte par un mécanisme d'authentification lui permettant d'obtenir des droits sur ledit réseau au sein d'une communauté d'utilisateurs.

Un serveur 6, comprenant un proxy d'impression, recueille les requêtes d'impression de différents utilisateurs du réseau 3. Le proxy d'impression peut permettre de générer une première interface utilisateur d'impression sur la station utilisateur, de récupérer un document numérique pour son impression, de sélectionner une imprimante pour la réalisation de ladite impression. Le service d'impression ou l'accès à un parc d'imprimantes géré par le proxy peut être administré de manière à autoriser ou ne pas autoriser un utilisateur à imprimer.

Dans l'exemple de réalisation représenté, l'utilisateur lance une impression d'un document, qui est noté D1 dans la figure 2. Le proxy d'impression réceptionne le fichier D1 dans un premier format, par exemple un format « .doc ».

Le procédé de l'invention permet de convertir le document D1 du premier format en un second format adapté à la description d'une page pour son impression. Parmi ces formats, on trouve par exemple les formats suivants :
- « Post Script » dont l'extension est connue par « ps » ;
- « Portable Document Format » dont l'extension est connue par « .pdf » ;
- « Encapsulated PostScript » dont l'extension est connue par « eps ».

Plus généralement, un format adapté à la description d'une page pour son impression permet une formulation vectorielle d'une image matricielle. La lecture de ce dernier format se réalise également de manière vectorielle ou matricielle.

L'invention se rapporte à tout format exploitable directement lisible par une imprimante qu'il soit préalablement converti ou non.

Pour la conversion des formats du document D1, le proxy peut réaliser cette action directement à partir des moyens de calcul du serveur 6 ou par un autre moyen de calcul K1 déporté ou non du serveur.

Le procédé de l'invention permet, selon un mode de réalisation, au moins une sélection d'une politique de sécurité pour l'impression par exemple parmi plusieurs politiques de sécurité possibles. La sélection de la politique de sécurité est automatiquement effectuée selon une accréditation attribuée à l'utilisateur après l'identification/authentification de son profil utilisateur. Les accréditations définissent des droits attribués à un utilisateur selon son profil qui est administré. Ainsi, lors de l'établissement de la connexion entre la station de travail 2 et le proxy d'impression, des informations sur l'utilisateur peuvent être exploitées de manière à sélectionner automatiquement une politique de sécurité par le proxy d'impression. C'est le cas, si l'utilisateur appartient à une communauté, par exemple un service d'une entreprise, dans laquelle une politique doit être appliquée de manière prédéterminée. Des données d'identification/authentification relatives à la station 2 de l'utilisateur peuvent être transférées au proxy d'impression de manière à ce qu'un contrôle soit réalisé notamment sur la politique de sécurité à appliquer. Le proxy d'impression interroge une mémoire M1 stockant l'ensemble des politiques de sécurité définies pour une communauté donnée. Ces dernières comprennent toutes les règles à appliquer concernant une communauté donnée selon chaque document dont on souhaite lui appliquer une politique. La mémoire M1 peut être dans le serveur 6 ou peut être déportée dans un autre serveur distant. Dans ce dernier cas, le serveur stockant les politiques de sécurité peut être maintenu de manière à être indépendant du serveur comprenant le proxy d'impression.

Une politique de sécurité définit un ensemble de règles de sécurité à appliquer à un document pour son impression. Par exemple, une politique de sécurité appelée « Politique Finance » peut définir un ensemble de règles de sécurité relatives à l'inscription de mentions dans tous les documents imprimés relevant de cette politique dans le service financier d'une entreprise. A titre d'exemple, certaines règles pourraient être définies comme suit :
- Une première règle comprend une première mention à appliquer en bas de page de chaque page dans une couleur donnée.
- Une seconde règle concerne une mention spécifique à appliquer sur la première page du document disposée en diagonale dans une police donnée.
- Une troisième règle peut concerner en outre l'inscription sur la première et la dernière page du nom de la personne qui imprime le document.

Lorsque la politique de sécurité est déterminée soit par un utilisateur soit de manière automatique, le procédé de l'invention permet de réaliser une étape de génération d'une reconnaissance optique de caractère du document reçu selon le premier format ou converti au second format d'impression de manière à déterminer si le document respecte les règles de sécurité d'une politique de sécurité sélectionnée. La génération de la reconnaissance optique permet d'obtenir un premier ensemble de données.

Un calculateur K2 permet d'effectuer la reconnaissance optique. Le calculateur K2 peut être intégré dans le serveur 6 ou déporté dans un autre équipement du réseau.

Selon les modes de réalisation, la reconnaissance optique peut être effectuée :
- préalablement à une étape de vérification du respect des règles de sécurité dans le document ou ;
- conjointement à l'étape de vérification du respect des règles de sécurité dans le document.

Dans le premier cas, la vérification est réalisée « post traitement », c'est-à-dire après l'opération de reconnaissance optique. Le procédé compare alors le premier ensemble de données numérisées optiquement avec des mentions, des inscriptions ou des motifs spécifiques correspondants à des règles de sécurité prédéfinies.

Dans le second cas, la reconnaissance optique est réalisée en connaissance de la politique de sécurité à appliquer. Ce dernier cas, permet une économie de traitement dans la mesure où certaines zones du document seulement peuvent être traitées sans numériser optiquement tout le document.

Une solution intermédiaire est de configurer l'étape de reconnaissance optique de manière à ce que la numérisation optique concerne toutes les zones affectées par l'ensemble des politiques de sécurité connues et stockées dans la mémoire M1. Ceci permet d'appliquer une autre politique de sécurité tardivement, par exemple en changeant en cours de procédure sans entrainer une seconde numérisation optique. Elle correspond à un compromis entre la puissance de calcul nécessaire à chaque impression et la flexibilité d'utilisation lorsqu'un changement de configurations est opéré pendant le procédé.

Le procédé comprend donc une étape de comparaison entre les motifs issus de règles de sécurité, leur emplacement acceptable tel que défini par les règles de sécurité, leur forme, leur agencement ou encore leur couleur et le premier ensemble de données numérisées dans les zones présumées du document D1 dans lesquelles les motifs devraient être présents.

On nomme dans la présente invention un « motif » : une inscription sur un document d'une mention relative à une règle de sécurité que cette dernière soit définie par des caractères alphanumériques ou non.

Le procédé comprend donc une étape de comparaison des motifs attendus sur un document relatif à une politique de sécurité sélectionnée avec leur réelle présence sur le document numérisé optiquement. Pour réaliser cette étape de comparaison, un calculateur K3 permet d'effectuer des corrélations de données d'images entre des images relatives aux motifs attendus et des données d'images relatives aux motifs réellement présents sur le document. Les corrélations sont présentées sous forme de données vectorielles ou matricielles.

Lorsque des écarts sont présents entre les motifs attendus et les motifs réellement présents, le procédé de l'invention permet de générer au moins un indicateur de conformité informant de ces écarts. Il peut s'agir d'un indicateur généré par écart ou par règle c'est-à-dire regroupant plusieurs écarts identiques relatifs à une même règle. En effet, si un motif doit apparaitre en bas de chaque page, et que ce dernier correspond à une règle de sécurité à appliquer, un seul indicateur peut être généré de manière à tracer l'écart constaté.

Le procédé de l'invention permet de tracer les écarts de manière à archiver l'ensemble des actions d'impression. Cet archivage peut être effectué au moyen d'une base de registres ou d'une mémoire ou encore d'un fichier de logs, noté SERV_LOG sur la figure 1. Les utilisateurs, ayant lancé (directement ou indirectement) une action de vérification de la conformité d'une politique de sécurité, peuvent grâce au procédé de l'invention consulter les écarts constatés entre la politique de sécurité à appliquer et celle réellement appliquée au document D1.

Cette possibilité comporte un grand intérêt dans la gestion des contenus numériques à imprimer lorsque des politiques de sécurité sont mises en place au sein d'une communauté. Notamment, les informations collectées peuvent permettre d'informer un personnel, de collecter les bonnes pratiques et de les diffuser. L'exploitation de ces informations permet à terme de diffuser les politiques de sécurité sur des règles peu ou pas appliquées par un grand nombre de personnes.

A ce stade, le procédé de l'invention permet de détecter des écarts et donc de générer des indicateurs permettant d'identifier si une politique de sécurité relative à l'impression d'un document est appliquée conformément aux règles qui la définissent.

Un second aspect de l'invention, intimement lié aux premières étapes du procédé de génération d'un indicateur, concerne un procédé de génération d'un motif de sécurité sur un document, ledit motif étant relatif à une règle de sécurité à appliquer.

En effet, le procédé de l'invention, lorsque les écarts ont été tracés, permet de générer des motifs de sécurité relatifs à une règle de sécurité qui manquent dans un document D1. Cette étape permet de respecter une politique de sécurité et d'appliquer ladite politique à tous les documents devant l'appliquer.

Pour réaliser cette étape, le proxy d'impression collecte les indicateurs traçant les écarts et génère les motifs de sécurité manquants à partir d'une bibliothèque stockant chaque motif de sécurité. Les motifs de sécurité peuvent correspondre à une inscription. Dans la mémoire stockant les règles de sécurité, un mode de réalisation permet de stocker tous les attributs de chaque motif de sécurité tels que :
- les emplacements sur le document : numéro de page, bas de page, milieu, haut de page ;
- les dispositions : orientation, formes complexes ;
- les dimensions : taille en largeur, hauteur ;
- l'aspect du motif : couleur, transparence, police, caractères ;
- etc.

Une base de données peut être utilisée à cet effet.

Le procédé permet de générer les motifs de sécurité manquants sur le document en considérant le document D1 dans son second format. Un avantage de cette caractéristique est de ne pas altérer ou modifier le document d'origine.

En outre, le procédé de l'invention permet de prendre en compte une politique de sécurité partiellement exécutée par un utilisateur. Typiquement, ce cas peut se produire lorsque l'utilisateur prend en compte qu'une seule partie des mentions nécessaires à l'application d'une politique de sécurité.

Un avantage de l'invention est donc de ne pas réappliquer une règle de sécurité par la présence d'un doublon de motif de sécurité. Le procédé de l'invention traite au cas par cas en examinant la présence de chaque motif.

Dans ce dernier cas, le procédé comprend la génération d'un indicateur permettant de détecter les écarts entre une politique de sécurité sélectionnée et les motifs attendus sur le document D1 correspondant à cette politique.

Le procédé comprend la sélection du document selon son second format et la récupération d'informations de disposition.

Les informations de disposition comprennent par exemple un agencement, une position et/ou un numéro de page. Ces informations attendues correspondent à au moins une règle de sécurité définissant un motif d'impression.

Le procédé permet de générer au moins un motif d'impression selon les informations de disposition qui ont été récupérées.

Dans un mode de réalisation, lorsque le procédé de l'invention génère les motifs de sécurité manquants, une étape de visualisation permet à un utilisateur de vérifier que les motifs manquants ont été convenablement générés sur le document.

Si une erreur est repérée par un utilisateur lors de la visualisation du document corrigé sur un moyen de visualisation en vue de son impression, une seconde interface utilisateur peut lui permettre de valider les motifs de sécurité générés. Un avantage de cette étape est d'enrichir le procédé par la prise en compte d'erreurs produites par le proxy d'impression. Des adaptations des règles de sécurité existantes peuvent être prises en compte par les administrateurs des politiques de sécurité par des remontées de messages d'utilisateurs également.

Enfin, le procédé comprend l'impression du document D1 sur une imprimante 4 de manière à imprimer un document qui prend en compte toutes les règles de sécurité d'une politique de sécurité. L'utilisateur a donc, à terme, respecté la politique de sécurité relative au type de document qu'il souhaite imprimer.

L'invention permet donc d'administrer une politique de sécurité via une première interface utilisateur tout en contrôlant que la politique est bien appliquée selon une seconde interface. En outre, une seule interface peut être proposée à un utilisateur, la première et la seconde interface étant couplées. En effet, l'invention propose un proxy d'impression permettant de gérer le choix de la politique de sécurité et des règles d'impression tels que le choix des imprimantes, leurs configurations et tous les réglages généralement appliqués aux imprimantes.

L'invention se présente également ainsi, c'est-à-dire sous la forme d'un proxy d'impression comprenant la connaissance de toutes les imprimantes du réseau de la communauté. Le serveur 6 hébergeant le proxy d'impression comprend en outre tous les moyens de calculs nécessaires à la numérisation d'images. L'invention comprend également un serveur de gestion des politiques de sécurité qui peut être installé dans un réseau déjà existant.

Selon un autre aspect de l'invention, l'invention concerne donc le système formé d'un serveur comprenant un proxy d'impression et un serveur comprenant les politiques de sécurité. Le proxy d'impression est un composant logiciel permettant de gérer les paramètres et les règles de sécurité d'impressions. Le proxy d'impression peut être configuré de manière à prendre en compte un parc d'imprimantes donné, des profils utilisateurs ou des préférences d'impressions. Le composant logiciel comprend dans ce cas des instructions permettant l'exécution des procédés de l'invention lorsque ces derniers sont réalisés au moyen d'un calculateur tel qu'un processeur et d'une mémoire permettant de stocker les variables et paramètres nécessaires et définis dans les procédés.

Ces serveurs peuvent être intégrés dans un réseau de communication comprenant un backbone, c'est-à-dire un coeur de réseau, des stations utilisateurs, une console d'administration du réseau et un parc d'imprimantes.

On considère dans son mode le plus simple, que les mémoires et les calculateurs nécessaires à la réalisation des étapes de l'invention sont ceux des serveurs objets de l'invention.

La figure 2 représente les principales étapes du procédé de l'invention selon une autre représentation. La station utilisateur 2 est reliée à un réseau 3 dans lequel un serveur 6 est accessible. La figure 2 représente un premier lien L1 dans lequel un document D1 est envoyé au serveur 6 comportant un proxy d'impression. Le document D1 est converti dans un format d'impression tel que décrit précédemment au moyen d'une première fonction F1 = T(D1). La fonction F1 permet la formulation vectorielle et/ou la lecture d'une image matricielle de données décrites d'au moins une page du document.

Ensuite, une seconde fonction F2 de reconnaissance optique de caractère, notée OCR(), est combinée avec une troisième fonction F3 permettant d'extraire des règles de sécurité d'une politique de sécurité présélectionnée par exemple stockée sur une mémoire M1 d'un serveur distant. Comme décrit précédemment, selon les modes de réalisations de l'invention, les fonctions F2 et F3 peuvent être réalisées de manière conjointes afin d'optimiser les ressources de calculs ou bien séquentiellement. Par exemple, la fonction F3 peut être appliquée au résultat de la reconnaissance optique de caractère appliquée au document D1 converti.

Une fonction F4, notée C(), est appliquée de manière à comparer les règles de sécurité appliquées au document D1 et les règles de sécurité manquantes à la politique de sécurité préconisée. Les écarts sont notés Δ(P1, D1) où P1 est une politique de sécurité choisie et D1 le document envoyé au proxy d'impression.

Une cinquième fonction notée MO(D1, Δ, P1) permet de générer un document final prêt pour l'impression dans lequel les règles de sécurité d'une politique de sécurité sélectionnée sont appliquées. Pour cela, à partir des indicateurs traçant les écarts Δ, le document est généré au format d'impression et envoyé à une imprimante 4 sélectionnée par exemple à partir du proxy d'impression de manière à lancer l'impression du document.

## Revendications

1. Procédé de génération d'au moins un indicateur de conformité entre au moins une politique de sécurité et au moins un document numérique comprenant un niveau de sécurité, ledit document étant destiné à être imprimé, la politique de sécurité comprenant un ensemble de règles de sécurité, le procédé comprenant :
• une réception dudit document numérique selon un premier format par un premier serveur dans un réseau, ledit document numérique étant imprimé par un utilisateur connecté au réseau par un mécanisme d'authentification;
• une sélection automatique de ladite politique de sécurité selon une accréditation attribuée à l'utilisateur après l'authentification de son profil utilisateur, ladite politique de sécurité comprenant au moins une règle de sécurité comportant la définition d'au moins un motif d'impression numérique;
• une génération d'une reconnaissance optique de caractères appliquée audit document numérique générant un premier ensemble de données ;
• une corrélation entre ledit motif numérique de ladite politique de sécurité sélectionnée et le premier ensemble de données généré ;
• une génération dudit indicateur de conformité entre la politique de sécurité sélectionnée et le niveau de sécurité du document, en fonction de la corrélation obtenue, comprenant la génération d'un log dans une base de données.

2. Procédé de génération d'un indicateur de conformité selon la revendication 1, **caractérisé en ce qu'**il comprend :
• une étape, subséquente à la réception du document, de conversion du premier format du document numérique en un second format adapté à la description de page pour l'impression, ledit second format comprenant au moins une fonction permettant la formulation vectorielle et/ou la lecture d'une image matricielle de données décrites d'au moins une page dudit document.

3. Procédé de génération d'un indicateur de conformité selon l'une quelconque des revendications 1 à 2, **caractérisé en ce qu'**au moins une règle sélectionnée comprend au moins :
• ledit motif d'impression ;
• une zone d'impression sur au moins une page du document numérique dudit motif d'impression ;
• un agencement du motif dans la zone d'impression.

4. Procédé de génération d'un indicateur de conformité selon l'une quelconque des revendications 1 à 3, **caractérisé en ce que** ledit motif de ladite règle de sécurité peut être compris dans la liste suivante :
• une mention indiquant une restriction de lecture ;
• une signature ;
• une mention qu'une page blanche est laissée intentionnellement blanche ;
• un numéro d'exemplaire ;
• un numéro de page ;
• une liste de destinataire.

5. Procédé de génération d'au moins un motif d'impression sur document numérique, ledit motif correspondant à une règle de sécurité sélectionnée, **caractérisé en ce que** ledit procédé comprend :
• une génération d'un indicateur selon le procédé de la revendication 2 ou l'une quelconque des revendications 3 à 4 prise en combinaison avec la revendication 2, ledit indicateur relevant un écart entre au moins un motif attendu et non représenté sur le document numérique en regard de la politique de sécurité sélectionnée ;
• une sélection du document selon son second format ;
• une récupération d'informations de disposition comprenant un agencement, une position et un numéro de page selon la règle de sécurité définissant le motif d'impression ;
• une génération d'au moins un motif d'impression sur le document selon les informations de disposition récupérées.

6. Procédé de génération d'au moins un motif d'impression sur le document numérique selon la revendication 5, **caractérisé en ce que** le procédé comprend :
• un affichage du document sur un moyen de visualisation de manière à permettre une inspection visuelle de la génération du motif d'impression par l'utilisateur.

7. Procédé de génération d'au moins un motif d'impression sur le document numérique selon la revendication 6, **caractérisé en ce que** le procédé comprend l'impression du document.

8. Système de gestion de l'application d'une politique de sécurité au sein d'un réseau de communication pour l'impression de documents, ledit système comprenant:
• un ensemble de stations (2) utilisateurs ;
• un premier serveur (6) permettant de générer une interface utilisateur d'impression sur une station utilisateur, de récupérer un document numérique pour son impression par un utilisateur connecté au réseau par un mécanisme d'authentification, de sélectionner une imprimante pour la réalisation de ladite impression ;
le système étant **caractérisé en ce qu'**il comprend:
• un deuxième serveur de gestion des politiques de sécurité comprenant un ensemble de règles de sécurité, chacune des règles comprenant la définition d'un ensemble de motifs ;
• un premier calculateur (K1) permettant la conversion d'un premier format dudit document numérique en un second format, le second format étant adapté à la description de page pour l'impression et comprenant au moins une fonction permettant la formulation vectorielle et/ou la lecture d'une image matricielle de données ;
• un second calculateur (K2) permettant de réaliser une reconnaissance optique de caractères dudit document numérique récupéré par le premier serveur pour générer un premier ensemble de données;
• un troisième calculateur (K3) permettant d'effectuer :
∘ une corrélation de données entre le premier ensemble de données et les données représentant les motifs d'au moins une règle de sécurité d'une politique de sécurité sélectionnée automatiquement selon une accréditation attribuée à l'utilisateur après l'authentification de son profil utilisateur;
∘ une génération d'indicateurs fonction de la corrélation traçant les écarts entre ladite règle de sécurité de ladite politique de sécurité sélectionnée à appliquer audit document numérique et les motifs manquants sur le document.

9. Système de gestion selon la revendication 8, **caractérisé en ce qu'**un serveur de log (SERV_LOG) sauvegarde les indicateurs générés.

10. Système de gestion selon l'une quelconque des revendications 8 à 9, **caractérisé en ce que** le proxy d'impression permet :
• une récupération d'informations de disposition comprenant un agencement, une position et un numéro de page pour chaque motif de la politique de sécurité choisi ;
• une sélection du second format du document numérique ;
• une génération d'au moins un motif d'impression manquant sur le document sélectionné selon les informations de dispositions récupérées.

## Patentansprüche

1. Generierungsverfahren wenigstens eines Konformitätsindikators zwischen wenigstens einer Sicherheitspolitik und wenigstens einem digitalen Dokument, umfassend ein Sicherheitsniveau, wobei das genannte Dokument zum Bedrucken bestimmt ist, wobei die Sicherheitspolitik eine Gruppe von Sicherheitsregeln umfasst, wobei das Verfahren umfasst:
• einen Empfang des genannten digitalen Dokuments gemäß einem ersten Format durch einen ersten Server in einem Netz, wobei das genannte digitale Dokument durch einen Nutzer bedruckt wird, der durch einen Authentifizierungsmechanismus an das Netz angeschlossen ist;
• eine automatische Auswahl der genannten Sicherheitspolitik gemäß einer Akkreditierung, die dem Nutzer nach der Authentifizierung seines Nutzerprofils zugeordnet wird, wobei die genannte Sicherheitspolitik wenigstens eine Sicherheitsregel umfasst, umfassend die Definition wenigstens eines digitalen Druckmotivs;
• ein Generieren einer optischen Erkennung von Zeichen, die auf das genannte digitale Dokument angewendet wird, das einen ersten Datensatz generiert;
• eine Korrelation zwischen dem genannten digitalen Motiv der genannten ausgewählten Sicherheitspolitik und der ersten generierten Datengruppe;
• ein Generieren des genannten Konformitätsindikators zwischen der ausgewählten Sicherheitspolitik und dem Sicherheitsniveau des Dokuments in Abhängigkeit von der erhaltenen Korrelation, umfassend das Generieren eines Logs in einer Datenbank.

2. Generierungsverfahren eines Konformitätsindikators gemäß Anspruch 1, **dadurch gekennzeichnet, dass** es umfasst:
• einen Konvertierungsschritt des ersten Formats des digitalen Dokuments in ein zweites Format, das für die Seitenbeschreibung für das Bedrucken geeignet ist, nach dem Empfang des Dokuments, wobei das genannte zweite Format wenigstens eine Funktion umfasst, die die vektorielle Formulierung und / oder das Lesen eines Matrixbildes von beschriebenen Daten wenigstens einer Seite des genannten Dokuments umfasst.

3. Generierungsverfahren eines Konformitätsindikators gemäß irgendeinem der Ansprüche 1 bis 2, **dadurch gekennzeichnet, dass** wenigstens eine ausgewählte Regel wenigstens umfasst:
• das genannte Druckmotiv;
• einen Druckbereich des genannten Druckmotivs auf wenigstens einer Seite des digitalen Dokuments;
• eine Anordnung des Motivs in dem Druckbereich.

4. Generierungsverfahren eines Konformitätsindikators gemäß irgendeinem der Ansprüche 1 bis 3, **dadurch gekennzeichnet, dass** das genannte Motiv der genannten Sicherheitsregel in der folgenden Liste inbegriffen sein kann:
• einen Vermerk als Hinweis einer Leseeinschränkung;
• eine Signatur;
• einen Hinweis, dass absichtlich eine leere Seite leer gelassen worden ist;
• eine Exemplarnummer;
• eine Seitennummer;
• eine Empfängerliste.

5. Generierungsverfahren wenigstens eines Druckmotivs auf einem digitalen Dokument, wobei das genannte Motiv einer ausgewählten Sicherheitsregel entspricht, **dadurch gekennzeichnet, dass** das genannte Verfahren umfasst:
• ein Generieren eines Indikators gemäß dem Verfahren des Anspruchs 2 oder irgendeinem der Ansprüche 3 bis 4 in Verbindung mit Anspruch 2, wobei der genannte Indikator eine Abweichung zwischen dem wenigstens einen erwarteten und nicht dargestellten Motiv auf dem digitalen Dokument gegenüber der ausgewählten Sicherheitspolitik erfasst;
• eine Auswahl des Dokuments gemäß seinem zweiten Format;
• eine Rekuperation von Dispositionsinformationen, umfassend eine Anordnung, eine Position und eine Seitennummer gemäß der Sicherheitsregel, die das Druckmotiv definiert;
• ein Generieren wenigstens eines Druckmotivs auf dem Dokument gemäß den rekuperierten Dispositionsinformationen.

6. Generierungsverfahren wenigstens eines Druckmotivs auf dem digitalen Dokument gemäß Anspruch 5, **dadurch gekennzeichnet, dass** das Verfahren umfasst:
• ein Anzeigedokument auf einem Anzeigemittel derart, dass eine visuelle Inspektion der Generierung des Druckmotivs durch den Nutzer zugelassen wird.

7. Generierungsverfahren wenigstens eines Druckmotivs auf dem digitalen Dokument gemäß Anspruch 6, **dadurch gekennzeichnet, dass** das Verfahren den Druck des Dokuments umfasst.

8. Verwaltungssystem der Anwendung einer Sicherheitspolitik innerhalb eines Kommunikationsnetzes für das Bedrucken von Dokumenten, wobei das System umfasst
• eine Gruppe von Nutzerstationen (2);
• einen ersten Server (6), der das Generieren einer Nutzerschnittstelle zum Bedrucken auf einer Nutzerstation, das Rekuperieren eines digitalen Dokuments zu seinem Bedrucken durch einen Benutzer, der durch einen Authentifizierungsmechanismus an das Netz angeschlossen ist, das Auswählen eines Druckers für die Realisierung des genannten Bedruckens zulässt;
wobei das System **dadurch gekennzeichnet ist, dass** es umfasst:
• einen zweiten Verwaltungsserver der Sicherheitspolitiken, umfassend eine Gruppe von Sicherheitsregeln, wobei jede Regel die Definition einer Gruppe von Motiven umfasst;
• einen ersten Rechner (K1), der die Konvertierung eines ersten Formats des genannten digitalen Dokuments in ein zweites Format zulässt, wobei das zweite Format an die Seitenbeschreibung für das Bedrucken geeignet ist und wenigstens eine Funktion umfasst, die die vektorielle Formulierung und / oder das Lesen eines Matrixbildes von Daten zulässt;
• einen zweiten Rechner (K2), der die Realisierung einer optischen Erkennung von Zeichen des genannten digitalen Dokuments zulässt, das vom ersten Server rekuperiert wurde, um eine erste Datengruppe zu generieren;
• einen dritten Rechner (K3), der die Ausführung zulässt:
∘ eine Datenkorrelation zwischen der ersten Datengruppe und den Daten, die die Motive wenigstens einer Sicherheitsregel einer Sicherheitspolitik darstellen, die gemäß einer Akkreditierung automatisch ausgewählt wird, die dem Nutzer nach der Authentifizierung seines Nutzerprofils zugeordnet ist;
∘ ein Generieren von Funktionsindikatoren der Korrelation, die die Abweichungen zwischen der genannten Sicherheitsregel der genannten ausgewählten Sicherheitspolitik, die auf das genannte digitale Dokument anzuwenden sind, und den auf dem Dokument fehlenden Motiven trassiert.

9. Verwaltungssystem gemäß Anspruch 8, **dadurch gekennzeichnet, dass** ein Log-Server (SERV_LOG) die generierten Indikatoren abspeichert.

10. Verwaltungssystem gemäß irgendeinem der Ansprüche 8 bis 9, **dadurch gekennzeichnet, dass** der Druckproxy zulässt:
• ein Rekuperieren von Bereitschaftsinformationen, umfassend eine Anordnung, eine Position und eine Seitennummer für jedes Motiv der gewählten Sicherheitspolitik;
• eine Auswahl des zweiten Formats des digitalen Dokuments;
• ein Generieren wenigstens eines Druckmotivs, das auf dem ausgewählten Dokument fehlt, gemäß den rekuperierten Bereitschaftsinformationen.

## Claims

1. A method for generating at least one compliance indicator between at least one security policy and at least one digital document comprising a security level, said document being intended to be printed, the security policy comprising a set of security rules, the method comprising:
• receiving said digital document according to a first format by a first server in a network, said digital document being printed by a user connected to the network by an authentication mechanism;
• automatically selecting said security policy according to a grant allocated to the user after authenticating his/her user profile, said security policy comprising at least one security rule including the definition of at least one digital printing pattern;
• generating an optical character recognition applied to said digital document generating a first set of data;
• correlating said digital pattern of said selected security policy and the generated first set of data;
• generating said compliance indicator between the selected security policy and the security level of the document, as a function of the obtained correlation, comprising generating a log in a database.

2. The method for generating a compliance indicator according to claim 1, **characterised in that** it comprises:
• a step, subsequently to receiving the document, of converting the first format of the digital document into a second format adapted to the page description for printing, said second format comprising at least one function allowing the vectorial formulation and/or the reading of a matrix image of described data of at least one page of said document.

3. The method for generating a compliance indicator according to any of claims 1 and 2, **characterised in that** at least one selected rule comprises at least:
• said printing pattern;
• a printing zone on at least one page of the digital document of said printing pattern;
• an arrangement of the pattern in the printing zone.

4. The method for generating a compliance indicator according to any of claims 1 to 3, **characterised in that** said pattern of said security rule can be included in the following list:
• a mention indicating a reading restriction;
• a signature;
• a mention that a blank page is intentionally left blank;
• a copy number;
• a page number;
• a list of recipients.

5. The method for generating at least one printing pattern on a digital document, said pattern corresponding to a selected safety rule, **characterised in that** said method comprises:
• generating an indicator according to the method of claim 2 or any of claims 3 and 4, taken in combination with claim 2, said indicator reading out a deviation between at least one expected pattern and not represented in the digital document with respect to the selected security policy;
• selecting the document according to its second format;
• recovering disposition information comprising an arrangement, a position and a page number according to the security rule defining the printing pattern;
• generating at least one printing pattern on the document depending on the recovered disposition information.

6. The method for generating at least one printing pattern on the digital document according to claim 5, **characterised in that** the method comprises:
• displaying the document on a display means so as to allow visual inspection of the generation of the printing pattern by the user.

7. The method for generating at least one printing pattern on the digital document according to claim 6, **characterised in that** the method comprises printing the document.

8. A system for managing the application of a security policy within a communication network for printing documents, said system comprising:
• a set of user stations (2);
• a first server (6) enabling a user interface for printing on a user station to be generated, a digital document for being printing to be recovered by a user connected to the network by an authentication mechanism, and a printer to be selected for carrying out said printing;
the system being **characterised in that** it comprises:
• a second server for managing security policies comprising a set of security rules, each of the rules comprising defining a set of patterns;
• a first calculator (K1) enabling a first format of said digital document to be converted into a second format, the second format being adapted to the page description for printing and comprising at least one function allowing the vectorial formulation and/or the reading of a matrix image of data;
• a second calculator (K2) enabling an optical character recognition of said digital document recovered by the first server to be made to generate a first set of data;
• a third calculator (K3) making possible to perform:
∘ correlating data between the first set of data and the data representing the patterns of at least one security rule of a security policy automatically selected according to a grant allocated to the user after authenticating his/her user profile;
∘ generating indicators as a function of the correlation tracing deviations between said security rule of said selected security policy to be applied to said digital document and the missing patterns on the document.

9. The management system according to claim 8, **characterised in that** a log server (SERV_LOG) saves the generated indicators.

10. The management system according to any of claims 8 and 9, **characterised in that** the printing proxy allows:
• recovering disposition information comprising an arrangement, a position and a page number for each pattern of the selected security policy;
• selecting the second format of the digital document;
• generating at least one missing printing pattern on the selected document according to the recovered disposition information.
